# EUROPÄISCHE PATENTSCHRIFT

(11) **EP 3 358 802 B1**
(45) Veröffentlichungstag und Bekanntmachung des Hinweises auf die Patenterteilung: **15.05.2019**
(21) Anmeldenummer: 17200297.4
(22) Anmeldetag: 07.11.2017
(51) Int. Cl.: H04L 29/06, H04L 9/08, H04L 9/14

(54) **VERFAHREN ZUM GESICHERTEN BEREITSTELLEN EINES KRYPTOGRAPHISCHEN SCHLÜSSELS**
METHOD FOR SECURELY PROVIDING A CRYPTOGRAPHIC KEY
PROCÉDÉ DE FOURNITURE SÉCURISÉE D'UNE CLÉ CRYPTOGRAPHIQUE

(30) Priorität: 03.02.2017 DE 102017102142
(43) Veröffentlichungstag der Anmeldung: 08.08.2018
(73) Patentinhaber: Insta GmbH, 58509 Lüdenscheid (DE)
(72) Erfinder: Langenbeck, Frank, 44269 Dortmund (DE)

(56) Entgegenhaltungen:
- WO-A1-2007/123224
- US-A1- 2003 026 433
- US-A1- 2007 150 742
- US-A1- 2011 299 684
- US-A1- 2014 302 774

## Beschreibung

Die Erfindung betrifft ein Verfahren zum gesicherten Bereitstellen eines kryptographischen Schlüssels für eine drahtlose Datenübermittlung zwischen in einem Netzwerk organisierten Netzwerkteilnehmern, von welchen Netzwerkteilnehmern für die Zwecke dieses Verfahrens ein Netzwerkteilnehmer als Server ausgelegt ist, der für die Zwecke einer gesicherten Kommunikation unter den Netzwerkteilnehmern diesen einen kryptographischen Netzwerkschlüssel zur Verfügung stellt und die Kommunikation zwischen den Netzwerkteilnehmern verschlüsselt unter Verwendung einer symmetrischen Verschlüsselung durchgeführt wird.

Drahtlose Netzwerke werden beispielsweise im Zusammenhang mit Gebäudeinstallationssystemen eingesetzt. Bei derartigen Systemen kommunizieren die als Netzwerkteilnehmer dienenden Geräte, wie beispielsweise Sensoren und Aktoren unterschiedlicher Art auf einer Funkstrecke untereinander. In aller Regel ist in ein solches Netzwerk ein Server integriert. Dieser ist daher auch als Netzwerk-Server angesprochen. Eine Kommunikation unter den Netzwerkteilnehmern ist grundsätzlich auch ohne einen solchen Netzwerk-Server möglich. Die Kommunikation läuft jedoch über diesen, wenn im Falle eines Gebäudeinstallationssytems bestimmte Komfortfunktionen an einem Aktor, beispielsweise der Beleuchtungseinrichtung, ausgeführt werden sollen. Eine solche Kommunikation in einem solchen Gebäudeinstallationsbus wird mit einem an sich bekannten Standard, beispielsweise dem KNX-Standard durchgeführt. Auch werden firmenspezifische Standards eingesetzt, wie beispielsweise das System eNet, welches von einigen Unternehmen für eine bidirektionale Funk-Kommunikation vorgesehen ist.

Die Kommunikation auf der Funkstrecke zwischen den Netzwerkteilnehmern wird verschlüsselt durchgeführt, um manipulative Eingriffe in ein solches Gebäudeinstallationssystem zu erschweren, wenn nicht gar unmöglich zu machen. Zu diesem Zweck stellt der in einem solchen Netzwerk integrierte Server, der in diesem Zusammenhang auch die Funktion eines Trust-Centers einnimmt, einen Netzwerkschlüssel zur Verfügung, den die Netzwerkteilnehmer sodann für ihre Kommunikation untereinander und für die Kommunikation mit dem Server verwenden. Jeder Netzwerkteilnehmer hat denselben Schlüssel. Die Verschlüsselung der zu übertragenden Daten erfolgt daher symmetrisch. Für die genannten Zwecke ist eine symmetrische Verschlüsselung vorteilhaft, da sich diese auch mit einer geringen Rechenleistung realisieren lässt. Bei Gebäudeinstallationsgeräten der in Rede stehenden Art ist die diesbezügliche Elektronik in aller Regel als embedded-system ausgeführt, weshalb eine ausreichende Rechenleistung zum Durchführen einer asymmetrischen Verschlüsselung in aller Regel nicht vorhanden ist.

Der Netzwerkschlüssel muss verschlüsselt von dem Netzwerk-Server an die Netzwerkteilnehmer übertragen werden, damit dieser nicht abgefangen und unbefugt verwendet werden kann. Auch für diese Verschlüsselung wird eine symmetrische Verschlüsselung eingesetzt. Zu diesem Zweck verfügt jedes Gebäudeinstallationsgerät - jeder Netzwerkteilnehmer - über einen eigenen, individuellen kryptographischen Schlüssel (Master-Key). Dieser ist in aller Regel auf einem Aufkleber auf dem Gerät aufgedruckt und muss manuell dem als Trust-Center dienenden Netzwerk-Server bekanntgegeben werden. Die Übertragung des geräteeigenen Master-Keys auf diese Weise an den Netzwerk-Server ist grundsätzlich möglich, ist jedoch bei einer Vielzahl von in ein Netzwerk einzubindenden Geräten zeitaufwendig und fehlerträchtig. Dieses trifft nicht nur für eine Neueinrichtung des Netzwerkes zu, sondern auch für den Fall, dass Geräte zu einem späteren Zeitpunkt in das Netzwerk eingebunden werden müssen. Es ist dann in aller Regel erforderlich, sämtliche Geräte neu bei dem Server mit ihrem Master-Key anzumelden, damit dieser einen Netzwerkschlüssel an alle dann im Netzwerk organisierten Netzwerkteilnehmer sendet. Bei dieser manuellen Übertragung kann auch ein manipulativer Abgriff erfolgen. Wenn der Netzwerk-Server die Master-Keys der Netzwerkteilnehmer kennt, erfolgt die Bekanntgabe des Netzwerkschlüssels jeweils mit dem netzwerkteilnehmereigenen Master-Key verschlüsselt. Daher ist eine solche Übertragung, obwohl über die Funkstrecke erfolgt, abhörsicher.

WO 2007/123224 A1 offenbart ein Verfahren zum Generieren von kryptografischen Schlüsseln für eine gesicherte Kommunikationsgruppe mehrerer Netzwerkteilnehmer. Bei diesem vorbekannten Verfahren wird von denjenigen Netzwerkteilnehmern, die zu einer neuen Sicherheitskommunikationsgruppe zusammengeschlossen werden sollen, eine Verbindungsanforderung an ein Schlüsselverteilungszentrum abgesetzt. Diese Anfrage wird durch Absetzen eines Schlüssels beantwortet, so dass anschließend die an der Sicherheitskommunikationsgruppe mitwirkenden Netzwerkteilnehmer unter Verwendung dieses Schlüssels kommunizieren können.

US 2007/0150742 A1 offenbart ein Verfahren für eine Sicherheitskommunikation von einer Gruppe mobiler Anwendungen. Einer der Netzwerkteilnehmer übernimmt die Rolle eines Servers und erhält von anderen Netzwerkteilnehmern einer Gruppe zum Zwecke des Bereitstellens und Verteilens eines gemeinsamen Netzwerkschlüssels von diesen eine Identifikationsinformation. Von dem Netzwerk-Server wird anschließend dieser Gruppe der Netzwerkteilnehmer ein kryptografischer Schlüssel für die vorgesehene Kommunikation zur Verfügung gestellt.

Gemäß US 2014/0302774 A1 wird zwischen Netzwerkteilnehmern eines drahtlosen Netzes von einem Netzwerkteilnehmer, der die Rolle eines Servers übernimmt, ein Netzwerkschlüssel für eine Gruppe von Netzwerkteilnehmern erzeugt und verteilt.

Aus US 2003/0026433 A1 ist eine Methode zum Austausch eines kryptografischen Schlüssels zwischen zwei Netzwerkteilnehmern bekannt. Nachdem sich beide Netzwerkteilnehmer bei einem Schlüssel-Verteilungs-center authentifiziert haben, wird in dem Schlüssel-Verteilungs-Center ein kryptografischer Schlüssel erzeugt und sodann an die beteiligten Netzwerkteilnehmer kommuniziert.

US 2011/0299684 A1 offenbart ein Gebäudeenergienetzwerk mit einer Schnittstelle für die Kommunikation mit einem Energiedienstleister und einer Schlüsseldatenbank. Der Schlüssel dient für eine Kommunikation zwischen den Energieverbrauchern in dem Gebäude und dem Energiedienstleister.

Ausgehend von dem eingangs diskutierten Stand der Technik liegt der Erfindung daher die Aufgabe zugrunde, ein Verfahren der eingangs genannten Art dergestalt weiterzubilden, dass die verschlüsselte Verteilung eines Netzwerkschlüssels in einem solchen Funknetzwerk nicht nur vereinfacht ist, sondern auch eine höhere Manipulationssicherheit aufweist.

Gelöst wird diese Aufgabe erfindungsgemäß durch ein Verfahren mit den Merkmalen des Anspruchs 1.

Bei diesem Verfahren erhält der als Trust-Center ausgelegte Netzwerk-Server den jedem Netzwerkteilnehmer zugeordneten individuellen kryptographischen Schlüssel (Master-Key) über eine gesicherte Verbindung von einem Zentral-Server. Eine solche gesicherte Verbindung zu einem Zentral-Server kann beispielsweise über einen VPN-Tunnel oder über eine HTTPS-Verbindung erfolgen. Auf dem Zentral-Server ist der jedem Netzwerkteilnehmer zugeordnete Master-Key zusammen mit einer Identifikationsinformation des Netzwerkteilnehmers typischerweise verschlüsselt vorabgelegt. Um den einem Netzwerkteilnehmer zugeordneten Mater-Key von dem Zentral-Server abrufen zu können, meldet sich der Netzwerk-Server bei diesem an und identifiziert denjenigen Netzwerkteilnehmer, zu dem er den Master-Key abrufen möchte, mit einer Identifikationsinformation dieses Netzwerkteilnehmers. Hierbei kann es sich beispielsweise um seine Seriennummer handeln. Die Identifikationsinformation des jeweiligen Netzteilnehmers erhält der Netzwerk-Server von jedem Netzwerkteilnehmer, und zwar typischerweise auf der netzwerkeigenen Funkstrecke. Diese Übermittlung braucht nicht verschlüsselt zu sein. Selbst wenn die Seriennummer eines Netzwerkteilnehmers, also beispielsweise eines als Taster ausgelegten Gebäudeinstallationsgerätes unautorisiert abgefangen wird, nutzt diese allein wenig. Schließlich hat die unberechtigt die Identifikationsinformation abfangende Person keinen Zugang zu dem Zentral-Server. Hat der Netzwerk-Server eine Identifikationsinformation eines Netzwerkteilnehmers erhalten, kann er mit dieser den diesem Netzwerkteilnehmer zugeordneten Master-Key von dem Zentral-Server abrufen. Von dem Zentral-Server kann der Datensatz, umfassend die Identifikationsinformation und den Master-Key abgerufen werden. Ebenso ist es möglich, dass alleinig der Master-Key an den Netzwerk-Server übermittelt wird. Typischerweise wird der Netzwerk-Server in einem ersten Schritt die Identifikationsinformation von einer Gruppe oder von sämtlichen Netzwerkteilnehmern einsammeln und dann in einem gesammelten Master-Key-Abruf die individuellen Master-Keys der Netzwerkteilnehmer von dem Zentral-Server abrufen. Je nach Ausgestaltung der Übermittlung an den Netzwerk-Server werden die empfangenen Daten gesichert abgelegt. Auf diese Weise erhält der Server den für eine Kommunikation mit einem Netzwerkteilnehmer notwendigen individuellen Master-Key, ohne dass dieser Schlüssel manuell gehandhabt werden müsste. Die Bekanntgabe der Identifikationsinformation des oder der Netzwerkteilnehmer bei dem Netzwerk-Server wird typischerweise unter Ausnutzung des vorhandenen Funk-Netzes durchgeführt, auch wenn grundsätzlich eine solche Information auch manuell am Netzwerk-Server eingegeben werden könnte. Ausgelöst werden kann das Senden der Identifikationsinformation, also beispielsweise der Seriennummer, durch einen Identifikationsinformationssendebefehl, getriggert etwa durch eine Taster-Betätigung an dem Netzwerkteilnehmer. Ebenfalls ist es möglich, dass die Netzwerkteilnehmer einen Identifikationsinformationssendebefehl von dem Netzwerk-Server erhalten, durch den diese aufgefordert werden, ihre Identifikationsinformation zu senden. Bei diesem Vorgang scannt der Netzwerk-Server die in Funkreichweite befindlichen Netzwerkteilnehmer zum Einsammeln ihrer Identifikationsinformation. Dieses kann beispielsweise nach einem zuvorigen Stromlos-Schalten der Netzwerkteilnehmer erfolgen. Mit ihrer anschließenden Bestromung schalten diese in aller Regel für ein gewisses Zeitfenster in einen Scan-Modus, in dem dann ein solcher Identifikationsinformationssendebefehl empfangen und umgesetzt werden kann. Das Schalten eines solchen Netzwerkteilnehmers in diesen Scan-Modus kann auch durch eine Taster-Betätigung an dem Netzwerkteilnehmer erfolgen. Bei der Übermittlung der Identifikationsinformation der Netzwerkteilnehmer an den Netzwerk-Server wird man in aller Regel darauf achten, dass jedes Gerät durch eine körperliche Authentisierung in den Scan-Modus geschaltet wird, um Manipulationen zu verhindern.

Der jedem Netzwerkteilnehmer zugeordnete Master-Key als individueller kryptographischer Schlüssel wird im Zusammenhang mit dem Fertigungsprozess der Netzwerkteilnehmer in einem Datensatz abgelegt und an den Zentral-Server übermittelt. Im Zuge des Herstellungsprozesses eines solchen Netzwerkteilnehmers wird der Master-Key typischerweise automatisiert eingeprägt. Als Datensatz kann dann beispielsweise die Seriennummer als Identifikationsinformation und der kryptographische Schlüssel (Master-Key) abgelegt und in einer Transferdatenbank zwischengespeichert werden, bevor dieser Datensatz, zusammen mit den Datensätzen weiterer Netzwerkteilnehmer, auf den Zentral-Server übertragen wird.

Nachfolgend ist die Erfindung anhand eines Ausführungsbeispiels unter Bezugnahme auf die beigefügten Figuren beschrieben. Es zeigen:
- **Fig. 1:**: Eine schematisierte Darstellung nach Art eines Blockschaltbildes der Komponenten zum gesicherten Bereitstellen eines kryptographischen Schlüssels für eine drahtlose Datenübermittlung innerhalb eines Funknetzes in einem ersten Verfahrensschritt,
- **Fig. 2:**: die Darstellung der Figur 1 in einem weiteren Verfahrensschritt und
- **Fig. 3:**: die Darstellung der Figuren 1 und 2 zum Erläutern eines weiteren Verfahrensschrittes.

In einem Gebäude 1 ist ein Funknetzwerk 2 installiert. Über dieses können die Netzwerkteilnehmer über Funk miteinander kommunizieren und somit Daten übermitteln. Bei dem Funknetzwerk 2 handelt es sich um ein solches eines Gebäudeinstallationssystems, welches mit einem an sich bekannten Standard arbeitet, beispielsweise KNX oder eNet. Bei den Netzwerkteilnehmern des Funknetzwerkes 2 handelt es sich um Gebäudeinstallationen, wie beispielsweise Sensoren und Aktoren. Beispielhaft sind in dem Gebäude 1 drei Geräte G**₁** bis G**₃** als Netzwerkteilnehmer aus einer größeren Zahl von Netzwerkteilnehmern dargestellt. In das Funknetzwerk 2 ist desweiteren ein Netzwerk-Server 3 eingeschaltet. Dieser stellt somit ebenfalls einen Netzwerkteilnehmer dar. Die Kommunikation innerhalb des Funknetzwerkes 2 kann zwischen einzelnen Geräten G**₁** bis G**₃** unmittelbar oder auch unter Zwischenschaltung des Netzwerk-Servers 3 vorgenommen werden. Die Funkkommunikation innerhalb des Funknetzwerkes 2 erfolgt, wenn dieses in Betrieb genommen worden ist, verschlüsselt, und zwar unter Verwendung einer symmetrischen Verschlüsselung. Hierzu ist es erforderlich, dass die miteinander kommunizierenden Netzwerkteilnehmer jeweils denselben Schlüssel eines Schlüsselpaares haben. Im Zusammenhang mit der Einrichtung des Funknetzwerkes 2 hat der Netzwerk-Server 3 jedem Gerät G**₁** bis G**₃** einen Netzwerkschlüssel zur Verfügung gestellt, sodass alle Netzwerkteilnehmer und somit die Geräte G**₁** bis G**₃** sowie der Netzwerk-Server 3 über denselben Schlüssel verfügen.

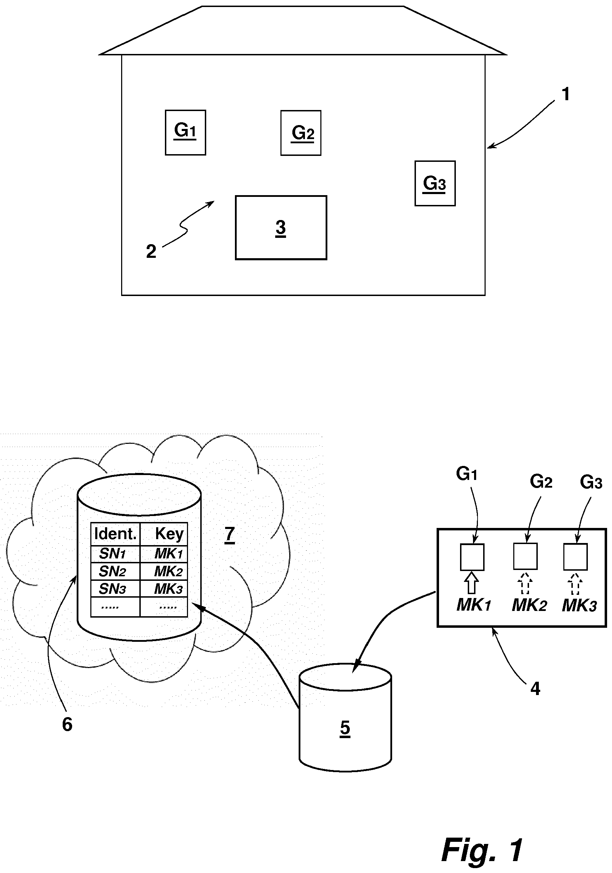

Nachfolgend wird das Verfahren beschrieben, gemäß dem die Geräte G**₁** bis G**₃** den Netzwerkschlüssel erhalten:
Bei der Herstellung der Geräte G**₁** bis G**₃** wird in einer Fabrikationsstätte 4 in jedes Geräte G**₁** bis G**₃** ein individueller kryptographischer Schlüssel, ein sogenannter Master-Key eingeprägt. Dieses ist in Figur 1 symbolisiert dargestellt. Die Master-Keys sind darin mit MK**₁** bis MK**₃** kenntlich gemacht. Jedes Gerät G**₁** bis G**₃** verfügt über eine individuelle Seriennummer. Nach erfolgreichem Einprägen des jeweiligen Master-Keys MK**₁**, MK**₂**, MK**₃** in das jeweilige Gerät G**₁** bis G**₃** wird für jedes Gerät G**₁** bis G**₃** ein Datensatz umfassend die Seriennummer SN**₁** bis SN**₃** als Identifikationsinformation für jedes Gerät G**₁** bis G**₃** und den eingeprägten Master-Key MK**₁** bis MK**₃** in einer Transferdatenbank 5 abgelegt. Von der Transferdatenbank 5 werden die diesbezüglichen Datensätze der hergestellten Geräte und somit auch der Geräte G**₁** bis G**₃** an einen Zentral-Server 6 übermittelt. Dieser kann sich an beliebiger Stelle befinden. Daher ist dieser symbolisiert in einer Cloud 7 abgebildet. Der Datentransfer von der Transferdatenbank 5 zu dem Zentral-Server 6 kann über eine gesicherte Internetverbindung, beispielsweise mit dem HTTPS-Protokoll vorgenommen werden. Es versteht sich, dass anstelle eines Zentral-Servers 6 auch mehrere Server vorgesehen sein können. In dem Zentral-Server 6 sind somit die den Seriennummern der hergestellten Geräte und damit auch der Geräte G**₁** bis G**₃** zugeordneten Master-Keys MK**₁** bis MK**₃** abgelegt. Diese Datenübergabe ist in Figur 1 gezeigt.

Bei der Einrichtung des Funknetzwerkes 2 wird in einem ersten Schritt von dem Netzwerk-Server 3 die Seriennummer SN**₁** bis SN**₃** als Identifikationsinformation von jedem Gerät G**₁** bis G**₃** eingesammelt. Zu diesem Zweck sendet der Netzwerk-Server 3 einen entsprechenden Identifikationsinformationssendebefehl, durch den die Geräte G**₁** bis G**₃** veranlasst sind, auf der Funkstrecke ihre Seriennummer SN**₁** bis SN**₃** an den Netzwerk-Server 3 zu übersenden. Zu diesem Zweck sind die Geräte G**₁** bis G**₃** zuvor in ihren Scan-Modus zur Authentisierung geschaltet worden, und zwar dadurch, dass bei jedem Gerät G**₁** bis G**₃** ein diesbezüglicher Tastenbefehl ausgeübt worden ist. Ist dieser Befehl bei den Geräten G**₁** bis G**₃** ausgeübt worden, wird der Netzwerk-Server 3 veranlasst, den Identifikationsinformationssendebefehl abzusetzen. Durchaus möglich ist auch das individuelle Authentisieren jedes Gerätes G**₁** bis G**₃** einzeln an dem Netzwerk-Server in derselben Art und Weise.

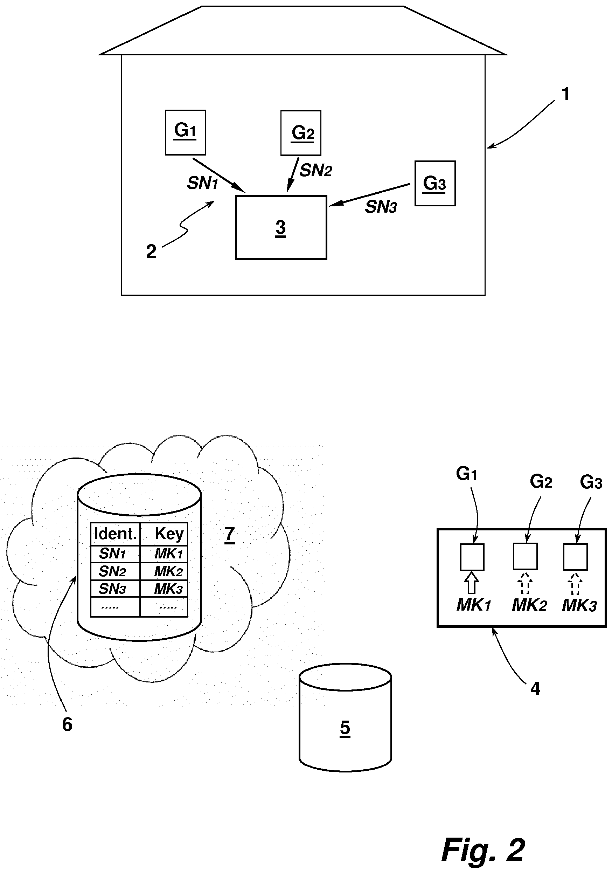

Der Netzwerk-Server 3 fungiert in diesem Fall auch als Trust-Center. Figur 2 zeigt schematisiert diesen Prozess des Einsammelns der Seriennummer der am Funknetzwerk 2 beteiligten Geräte G**₁** bis G**₃** als Netzwerkteilnehmer.

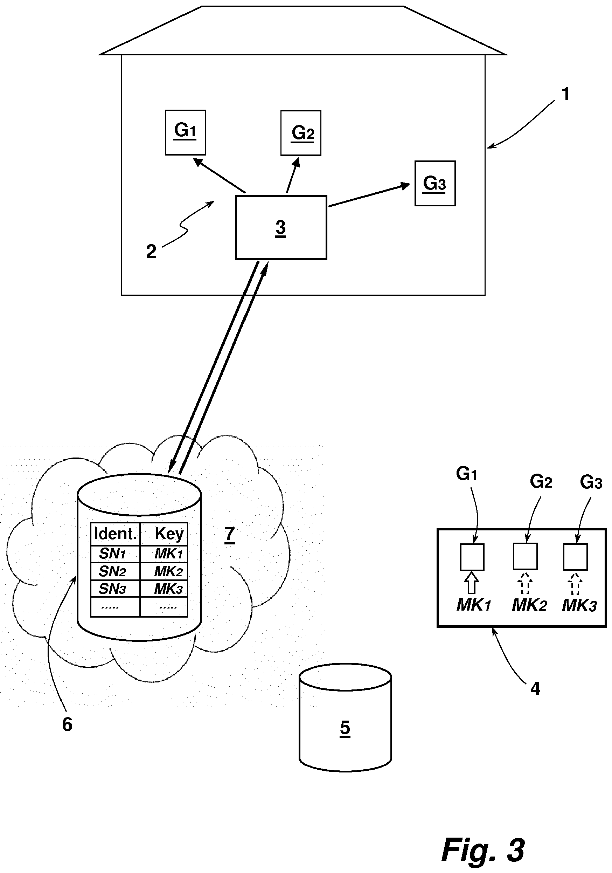

In einem nachfolgenden Schritt (s. Figur 3) meldet sich der Netzwerk-Server 3 auf einer gesicherten Internetverbindung - einer HTTPS-Verbindung - bei dem Zentral-Server 6 an, um den jeder Seriennummer SN**₁** bis SN**₃** zugeordneten Master-Key MK**₁** bis MK**₃** abzurufen. Zu diesem Zweck übersendet der Netzwerk-Server 3 an den Zentral-Server 6 die von ihm von den Geräten G**₁** bis G**₃** zur Verfügung gestellten Seriennummer SN**₁** bis SN**₃** und erhält daraufhin den jeder Seriennummer SN**₁** bis SN**₃** zugeordneten Master-Key MK**₁** bis MK**₃**. In einem gesicherten Speicher wird dieser jeweils gerätebezogene Datensatz umfassend die Seriennummer und den Master-Key abgelegt. Der Netzwerk-Server 3 kann fortan mit jedem Gerät G**₁** bis G**₃** auf der Funkstrecke verschlüsselt Daten übermitteln bzw. kommunizieren, und zwar unter Verwendung einer symmetrischen Verschlüsselung mit dem jeweils individuellen Master-Key MK**₁** bis MK**₃**. Unter Ausnutzung dieser Verschlüsselungsmöglichkeit sendet der Netzwerk-Server 3 sodann an die Geräte G**₁** bis G**₃** verschlüsselt den Netzwerkschlüssel, sodass anschließend alle Teilnehmer des Funknetzwerkes 2 denselben Netzwerkschlüssel für die verschlüsselte Kommunikation untereinander zur Verfügung haben. Dieser wird auch als Runtime-Schlüssel angesprochen.

Da der Netzwerk-Server 3 mit jedem Gerät G**₁** bis G**₃** individuell verschlüsselt kommunizieren kann, besteht somit auch die Möglichkeit, dass von Zeit zu Zeit ein neuer Netzwerkschlüssel ausgegeben werden kann.

Die Beschreibung der Erfindung auch anhand des Ausführungsbeispiels lässt deutlich werden, dass das Einrichten eines solchen Funknetzwerkes gegenüber herkömmlichen Verfahren erheblich vereinfacht ist und auch beliebig häufig wiederholt werden kann, beispielsweise wenn neue Geräte als Netzwerkteilnehmer in das Funknetzwerk 2 eingebunden werden sollen. Von Besonderheit ist, dass sich das Verfahren völlig ohne manuelle Einflussnahme durchführen lässt, was ebenfalls die Systemsicherheit erhöht.

Grundsätzlich ist der beschriebene Netzwerk-Server nur für die Einrichtung des Funknetzwerkes erforderlich. In vielen Fällen wird man einen solchen Server im Funknetzwerk belassen. Allerdings kann dieser auch nach der Übermittlung des Netzwerkschlüssels aus dem Netzwerk herausgenommen werden, wenn alleinig eine Kommunikation zwischen den übrigen Netzteilnehmern vorgesehen ist.

Die Erfindung ist anhand von Ausführungsbeispielen beschrieben worden. Ohne den Umfang der geltenden Ansprüchen zu verlassen, ergeben sich für einen Fachmann zahlreiche weitere Ausgestaltungsmöglichkeiten, die Erfindung umzusetzen, ohne dass dieses im Einzelnen im Rahmen dieser Ausführungen dargelegt werden müsste.

### Bezugszeichenliste

- 1: Gebäude
- 2: Funknetzwerk
- 3: Netzwerk-Server
- 4: Fabrikationsstätte
- 5: Transferdatenbank
- 6: Zentral-Server
- 7: Cloud
- G**₁** bis G**₃**: Gerät
- MK**₁** bis MK**₃**: Master-Key
- SN**₁** bis SN**₃**: Seriennummer

## Patentansprüche

1. Verfahren zum gesicherten Bereitstellen eines kryptographischen Netzwerk-Schlüssels für eine drahtlose Datenübermittlung zwischen in einem Netzwerk (2) organisierten Netzwerkteilnehmern (G**₁** bis G**₃**), von welchen Netzwerkteilnehmern (G**₁** bis G**₃**) für die Zwecke dieses Verfahrens ein Netzwerkteilnehmer als Netzwerk-Server (3) ausgelegt ist, der für die Zwecke einer Kommunikation unter den Netzwerkteilnehmern (G**₁** bis G**₃**) diesen Netzwerkschlüssel zur Verfügung stellt, wobei die Kommunikation zwischen dem Netzwerk-Server (3) und den übrigen Netzwerkteilnehmern (G**₁** bis G**₃**) verschlüsselt unter Verwendung einer symmetrischen Verschlüsselung durchgeführt wird, wobei in einem ersten Schritt der Netzwerk-Server (3) von jedem Netzwerkteilnehmer (G**₁** bis G**₃**) eine Identifikationsinformation (SN**₁** bis SN**₃**) erhält, **dadurch gekennzeichnet, dass** der Netzwerk-Server (3) in einem nachfolgenden Schritt über eine gesicherte Verbindung zu einem Zentral-Server (6) von diesem anhand der Identifikationsinformation (SN**₁** bis SN**₃**) den diesem Netzwerkteilnehmer (G**₁** bis G**₃**) zugeordneten kryptographischen Schlüssel (MK**₁** bis MK**₃**) abruft, gesichert in Zuordnung zu der Identifikationsinformation (SN**₁** bis SN**₃**) des jeweiligen Netzwerkteilnehmers (G**₁** bis G**₃**) ablegt, nachfolgend den Netzwerkschlüssel drahtlos unter Verwendung der symmetrischen Verschlüsselung an den jeweiligen Netzwerkteilnehmer (G**₁** bis G**₃**) sendet, wobei der kryptographische Schlüssel (MK**₁** bis MK**₃**) jedes Netzwerkteilnehmers (G**₁** bis G**₃**) im Zusammenhang mit dem Prozess des Einprägens desselben in jeden Netzwerkteilnehmer (G**₁** bis G**₃**) gemeinsam mit der Identifikationsinformation (SN**₁** bis SN**₃**) dieses Netzwerkteilnehmers (G**₁** bis G**₃**) in einem Datensatz abgelegt und dieser Datensatz an den Zentral-Server (6) übertragen wird.

2. Verfahren nach Anspruch 1, **dadurch gekennzeichnet, dass** die Identifikationsinformation (SN**₁** bis SN**₃**) der Netzwerkteilnehmer (G**₁** bis G**₃**) von dem jeweiligen Netzwerkteilnehmer (G**₁** bis G**₃**) über die drahtlose Kommunikationsstrecke des Netzwerkes an den Netzwerk-Server (3) übertragen wird.

3. Verfahren nach Anspruch 1 oder 2, **dadurch gekennzeichnet, dass** die drahtlose Kommunikation auf einer Funkstrecke durchgeführt wird.

4. Verfahren nach Anspruch 2 oder 3, **dadurch gekennzeichnet, dass** die Übertragung der Identifikationsinformation (SN**₁** bis SN**₃**) des Netzwerkteilnehmers (G**₁** bis G**₃**) an den Netzwerk-Server (3) infolge eines manuell an dem jeweiligen Netzwerkteilnehmer generierten Befehls erfolgt.

5. Verfahren nach Anspruch 2 oder 3, **dadurch gekennzeichnet, dass** die Identifikationsinformation (SN**₁** bis SN**₃**) der Netzteilnehmer (G**₁** bis G**₃**) durch den Netzwerk-Server (3) infolge des Aussendens eines Identifikationsinformationssendebefehl erfolgt.

6. Verfahren nach einem der Ansprüche 1 bis 5, **dadurch gekennzeichnet, dass** als Identifikationsinformation die Seriennummer (SN**₁** bis SN**₃**) des Netzwerkteilnehmers (G**₁** bis G**₃**) an den Netzwerk-Server (3) übertragen wird.

7. Verfahren nach einem der Ansprüche 1 bis 6, **dadurch gekennzeichnet, dass** die Verbindung zwischen dem Netzwerk-Server (3) und dem Zentral-Server (6) über eine gesicherte Internetprotokollverbindung aufgebaut wird.

8. Verfahren nach einem der Ansprüche 1 bis 7, **dadurch gekennzeichnet, dass** der Datensatz geschrieben wird, nachdem der kryptographische Schlüssel (MK**₁** bis MK**₃**) erfolgreich in den Netzwerkteilnehmer (G**₁** bis G**₃**) eingeprägt worden ist.

9. Verfahren nach einem der Ansprüche 1 bis 8, **dadurch gekennzeichnet, dass** eine Übertragung der Datensätze von der Fabrikationsstelle (4), in der die kryptographischen Schlüssel (MK**₁** bis MK**₃**) in den jeweiligen Netzwerkteilnehmer (G**₁** bis G**₃**) eingeprägt werden, an den Zentral-Server (6) batchweise mit einer gleichzeitigen Übertragung einer Mehrzahl von Datensätzen erfolgt.

10. Verfahren nach einem der Ansprüche 1 bis 9, **dadurch gekennzeichnet, dass** dieses für die Kommunikation in einem Gebäudeinstallationsnetzwerk verwendet wird, wobei es sich bei den Netzwerkteilnehmern um Gebäudeinstallationsgeräte (G**₁** bis G**₃**) handelt.

## Claims

1. Method for securely providing a cryptographic network key for wireless data transfer between network devices (G₁ to G₃) organized in a network (2), one of these network devices (G₁ to G₃) being designed as network server (3) for the purpose of this method and designed for providing this network key for communication among the network devices (G₁ to G₃), wherein the communication between the network server (3) and the other network devices (G₁ to G₃) is encrypted by symmetrical encryption, wherein in a first step the network server (3) receives an identification information (SN₁ to SN₃) from each network device (G₁ to G₃), **characterized by the fact** that in a further step the network server (3), via a secure connection, retrieves the cryptographic key (MK₁ to MK₃) assigned to this network device (G₁ to G₃) from a central server (6) by means of an identification information (SN₁ to SN₃), stores it securely assigning it to the identification information (SN₁ to SN₃) of the respective network device (G₁ to G₃), then sends the network key to the respective network device (G₁ to G₃) by wireless transmission using symmetrical encryption, wherein the cryptographic key (MK₁ to MK₃) of each network device (G₁ to G₃) is stored in a data record together with the identification information (SN1 to SN3) of that network device (G1 to G3) in connection with the process of imprinting the cryptographic key into each network device (G1 to G3), and this data record is transferred to the central server (6).

2. Method in accordance with Claim 1, **characterized by the fact** that the identification information (SN₁ to SN₃) of the network devices (G₁ to G₃) is transferred from the relevant network device (G₁ to G₃) to the network server (3) via the wireless communication link of the network.

3. Method in accordance with Claim 1 or 2, **characterized by the fact** that the wireless communication takes place on a radio link.

4. Method in accordance with Claim 2 or 3, **characterized by the fact** that the identification information (SN₁ to SN₃) of the network device (G₁ to G₃) is transferred to the network server (3) as a result of a command generated manually at the respective network device.

5. Method in accordance with Claim 2 or 3, **characterized by the fact** that the identification information (SN₁ to SN₃) of the network devices (G₁ to G₃) is provided by the network server (3) as a result of the transmission of an identification information transmission command.

6. Method in accordance with any of Claims 1 to 5, **characterized by the fact** that as identification information the serial number (SN₁ to SN₃) of the network device (G₁ to G₃) is transferred to the network server (3).

7. Method in accordance with any of Claims 1 to 6, **characterized by the fact** that the connection between the network server (3) and the central server (6) is established via a secure internet protocol connection.

8. Method in accordance with any of Claims 1 to 7, **characterized by the fact** that the data record is written after the cryptographic key (MK₁ to MK₃) has been imprinted successfully into the network device (G₁ to G₃).

9. Method in accordance with any of Claims 1 to 8, **characterized by the fact** that the data records are transferred batchwise from the manufacturing location (4) in which the cryptographic keys (MK₁ to MK₃) are imprinted into the respective network devices (G₁ to G₃) to the central server (6) with simultaneous transfer of a plurality of data records.

10. Method in accordance with any of Claims 1 to 9, **characterized by the fact** that this method is applied for communication in a building installation network, the network devices (G₁ to G₃) being building installation devices.

## Revendications

1. Procédé pour la mise à disposition sûre d'une clé de réseau cryptographique pour une transmission de données sans fil entre des participants (G₁ à G₃) organisés en un réseau (2), l'un de ces participants au réseau (G₁ à G₃) étant conçu pour les finalités de ce procédé sous forme de serveur du réseau (3) mettant à disposition, pour les finalités d'une communication entre les participants au réseau (G₁ à G₃), cette clé de réseau, la communication entre le serveur du réseau (3) et les autres participants (G₁ à G₃) ayant lieu sous forme cryptée par l'utilisation d'un cryptage symétrique, dans une première étape, le serveur du réseau (3) recevant de chaque participant au réseau (G₁ à G₃) une information d'identification (SN₁ à SN₃), **caractérisé en ce que** le serveur du réseau (3), dans une étape suivante, appelle par l'intermédiaire d'une connexion sûre à un serveur central (6) sur celui-ci, à l'aide de l'information d'identification (SN1 à SN3), la clé cryptographique (MK₁ à MK₃) attribuée à ce participant au réseau (G1 à G3), la stocke de manière sûre associée à l'information d'identification (SN₁ à SN₃) du participant au réseau respectivement correspondant (G₁ à G₃), envoie ensuite la clé de réseau sans fil au participant au réseau respectivement correspondant (G₁ à G₃), en utilisant le cryptage symétrique, la clé cryptographique (MK₁ à MK₃) de chaque participant au réseau (G₁ à G₃), en rapport avec le processus de mémorisation de celui-ci dans chaque participant au réseau (G₁ à G₃), étant stockée ensemble avec l'information d'identification (SN₁ à SN₃) de chaque participant au réseau (G₁ à G₃) dans un jeu de données et ce jeu de données étant transmis au serveur central (6).

2. Procédé selon la revendication 1, **caractérisé en ce que** l'information d'identification (SN₁ à SN₃) des participants au réseau (G₁ à G₃) est transmise au serveur du réseau (3) par le participant au réseau respectivement correspondant (G₁ à G₃) par l'intermédiaire de la liaison de communication sans fil du réseau.

3. Procédé selon la revendication 1 ou 2, **caractérisé en ce que** la communication sans fil a lieu sur une liaison radio.

4. Procédé selon la revendication 2 ou 3, **caractérisé en ce que** la transmission de l'information d'identification (SN₁ à SN₃) du participant au réseau (G₁ à G₃) au serveur du réseau (3) a lieu par suite d'un ordre généré manuellement au niveau du participant au réseau respectivement correspondant.

5. Procédé selon la revendication 2 ou 3, **caractérisé en ce que** l'information d'identification (SN₁ à SN₃) des participants au réseau (G₁ à G₃) a lieu par le serveur du réseau (3) par suite de l'émission d'un ordre d'envoi de l'information d'identification.

6. Procédé selon l'une des revendications 1 à 5, **caractérisé en ce que** c'est le numéro de série (SN₁ à SN₃) du participant au réseau (G₁ à G₃) qui est transmis au serveur du réseau (3) à titre d'information d'identification.

7. Procédé selon l'une des revendications 1 à 6, **caractérisé en ce que** la connexion entre le serveur du réseau (3) et le serveur central (6) est établie par l'intermédiaire d'une connexion sûre protocole Internet.

8. Procédé selon l'une des revendications 1 à 7, **caractérisé en ce que** le jeu de données est écrit après que la clé cryptographique (MK₁ à MK₃) a été mémorisée avec succès dans le participant au réseau (G₁ à G₃).

9. Procédé selon l'une des revendications 1 à 8, **caractérisé en ce que** une transmission au serveur central (6) des jeux de données du lieu de fabrication (4) où sont mémorisées les clés cryptographiques (MK₁ à MK₃) dans le participant au réseau respectivement correspondant (G₁ à G₃) a lieu par lots, avec transmission simultanée de plusieurs jeux de données.

10. Procédé selon l'une des revendications 1 à 9, **caractérisé en ce que** celui-ci est utilisé pour la communication dans un réseau d'installation en bâtiment ou d'installation domotique, les participants au réseau étant des appareils d'installation en bâtiment ou d'installation domotique (G₁ à G₃).
